# EUROPEAN PATENT APPLICATION

(11) **EP 3 909 880 A1**
(43) Date of publication of application: **17.11.2021**
(21) Application number: 20174350.7
(22) Date of filing: 13.05.2020
(51) Int. Cl.: B65B 61/18, B65B 69/00, B29C 65/18, B29C 65/74, B29C 65/00

(54) **METHOD AND DEVICE FOR CREATING AN ENVIRONMENTALLY SEALED CONNECTION BETWEEN TWO REGIONS**

(71) Applicant: Lugaia AG, 3942 Raron (CH)
(72) Inventor: Schnyder, Viktor, 3942 Raron (CH)
(74) Representative: P&TS SA (AG, Ltd.)

(57) **Abstract**

A method and device for creating an environmentally sealed connection for transfer between a first region and a second region, the first region and the second region each having an at least partially flexible barrier with connection portions, comprising the following steps: (i) superposition of said connection portions of the barriers in a sandwich arrangement, wherein each connection portion comprises a first area at least partially made of thermo-resistant material and a second area comprising a first welding band zone of a closed geometrical shape, said first and second area of each barrier being arranged to face one another, with the first areas of the two barriers forming the outside layers of the sandwich arrangement, and the second areas of the two barriers forming the inside layers of the sandwich arrangement, wherein the first areas are positioned to cover the first welding band zones of the second zones, (ii) joining the second areas by welding of the first closed welding band zones, whereby a first separation line, comprised inside and along the length of the first welding band zone, is cut as a result of the welding and whereby the barrier areas enclosed by the separation line are welded along their edges to form an insert, which becomes detached from the at least partially flexible barriers, and (iii) distancing the first areas of the super-positioned connection portions from each other, for example by pulling them apart, thereby revealing an opening confined by the welded seam connecting the second areas of the at least partially flexible barriers and joining the first region with the second region.

## Description

### Technical domain

The present invention concerns a method and device for generating an environmentally sealed connection between two regions suited for transfer, which is not exposed to an external environment.

### Related art

Several industry sectors, such as the pharmaceutical and biotech industry, chemical industry and medical device industry, regularly face the problem of how to join a volume or region of a defined environmental condition, such as a defined contamination status, with another volume or region of the same environmental condition without exposing either of the volumes of regions to an external environment with different environmental condition. In these industries, the consequences of contaminating the enclosed volumes or regions with the external environment may result in considerable financial consequences and potentially poses a severe risk for consumer or patient health.

The same technical problem, i.e. how to safely join two regions under exclusion of the environment, presents itself also in a medical setting, for example if sterile-packed consumables or tools, such as syringes, need to be transferred from their packaging into a sterile chamber or sterile room. Similarly, the sterile transfer of organs, uncontaminated biological tissue or samples from one containment to another also faces this problem.

Since this is a widely known technical challenge, it is not surprising that a number approached have been described to safely join packaging, containers or other volumes for the uncontaminated transfer of different objects and materials.

Document WO2018019785 discloses the extraction of a content of a bag for pharmaceutical and chemical sectors from a first environment into a second environment being separated form a third environment of a different contamination classes. The extraction assembly employs a separation wall comprised in an end mouth of the bag, which is formed by opposing flaps. The opening mechanism relies on grippers and jaws operating the flaps and on movable closing partitions.

Document EP2441692B1 a device and method to transfer a sterile object from a sterile bag from a non-sterile environment to a sterile environment through an inlet mouth of an inlet section of the sterile environment. The sterile bag is cut, and the product is expulsed from the bag by pushing on the outer face of the bag. This invention neither discloses superposition not welding of a bag or liner.

Document US2012085490A1 discloses a method for contamination-free docking of a first at least partially flexible receptacle to a second at least partially flexible receptacle. The receptacles include, at least in part, films having outer sides that can be solidly welded, and inner sides can be detachably welded. According to the described system, a solid connection between the receptacles is produced outside the detachably welded inner sides in order to create a channel between the receptacles. The channel is opened by loosening the connection between the inner sides.

Document US2011142574A1 discloses a method of transferring at least one object, sterilised and packed into a bag, into a clean room, where the bag is connected with an inner liner connecting the clean room with an outer room and on this is opened at an area open towards the inner liner so that a tube-like connection, closed towards the outer room, is formed between the interior of the bag and the inner liner, through which the at least one object is transferred into the clean room.

Document US2010012225A1 discloses a device and a method for decanting powders and solid substances or materials while avoiding contamination and a novel use of a weldable and peelable continuous tubular film. The transfer opening is generated by selective peeling of fused welding seams.

Document US2018369801 discloses a method for manufacturing a leaktight assembly by providing a bag, a connection system including a connector adapted for mechanical connection to a complementary connector of a sterile chamber in order to establish sterile communication between the bag and the chamber. The connection system comprises and overmolding onto which the wall of the bag is molded for the sterile transfer.

Document US2014314527A1 discloses a discharge method for discharging a sterile good from an at least partially flexible container without contamination, through a liner into a receiving region employing a knife to create an aperture in the flexible container.

Document US2018078665A1 discloses a medical packaging bag having different thermal property zones. The invention does not disclose a method for transfer between different regions.

Document EP1918209B1 discloses a process to empty a package without contamination at a station where the package is wrapped in a tubular film inside the station. The wrapped package is opened in station and emptied by cutting a region. This invention neither discloses superposition not welding of a bag or liner.

Document US5858016A discloses the generation of an aseptic/sterile fluid connection between two containers by radiofrequency welding, wherein portions of adjacent container outer walls are fused and a fluid opening is subsequently formed due to squeezing action of the dies.

Based on the state of the art, the present invention sets out to find a solution for the reliable generation of a joining connection between two regions under exclusion of a third external region. Preferably, the solution should to be able to safeguard that the barriers between the external environment and the environment of the two regions are not breached during the process of joining the regions or during the operational steps thereafter. The solution should be simple to use and suited for repeated or serial use, for example to facilitate repeated transfer of items from several distinct first regions to one second region. The solution should also be highly reliable in its capacity to protect against contamination in order to be adequate for operations in sterile environments and to meet the high standards required for medical and pharmaceutical applications.

### Short disclosure of the invention

An aim of the present invention is the generation of a joining connection between two regions which meets the desired requirements of being simple to use, but secure in terms of maintaining the integrity of the barriers separating said two regions from an external environment.

Another aim of the invention is to provide a system for the transfer or objects, materials, biological matter and lifeforms between two regions of the same environmental conditions avoiding contamination of these regions by the external environment.

Another aim of the invention is the provision of a system which can be used repeatedly in quick succession without the need of extensive additional manipulation for serial use.

According to the invention, these aims are attained by providing a method and device for connecting the barriers of a first and a second region through a cut'n'seal welding step as part of which an opening between two regions is created.

In particular these aims are attained by the object of the attached claims, and especially by:
Method of creating an environmentally sealed connection for transfer between a first region and a second region, the first region and the second region having each an at least partially flexible barrier separating the first region, respectively the second region from a third external region, the at least partially flexible barriers having each a connection portion comprising a first area at least partially made of thermo-resistant material and a second area comprising a first welding band zone of a closed geometrical shape, the method comprising the following steps:
- superposition of said connection portions of the barriers in a sandwich arrangement, said first area and second area of each barrier being arranged to face one another, with the first areas at least partially made of thermo-resistant material of the two barriers forming the outside layers of the sandwich arrangement, and the second areas of the two barriers forming the inside layers of the sandwich arrangement, wherein the first areas are positioned to cover the first welding band zones of the second zones,
- joining the second areas by welding of the first closed welding band zones, whereby a first separation line, comprised inside and along the length of the first welding band zone, is cut as a result of the welding and whereby the barrier areas enclosed by the separation line are welded along their edges to form an insert, which becomes detached from the flexible barriers,
- distancing the first areas of the super-positioned connection portions from each other, for example by pulling them apart, thereby revealing an opening confined by the welded seam connecting the second areas of the at least partially flexible barriers and joining the first region with the second region,
   and, optionally,
- transfer of objects, such as equipment, goods or material, as well as organisms, chemical or biological matter from the first region to the second region through the opening.

If required, it is possible to reseal the two joined regions by separation welding along a second welding band zone, which is cut at a separation line situated inside this second welding band zone. The separation between the two regions is preferably performed subsequent to the transfer step. The separated and sealed receiving region can thus be prepared for a further transfer process.

The at least partially flexible barriers are part of a barrier system which hermetically seals the first and/or second regions from the external third region. Advantageously, this barrier is not breached at any stage during the process of connecting the first with the second region. An intact barrier is at all times maintained for one of the regions, preferably the second region. Ideally, the integrity of the barrier is also maintained after separation of the joined first and second regions.

Advantageously, the insert, which is cut from the barriers as part of the welding of the first welding zones, is sealed along its perimeter by means of the welding seam generated as part of said welding. It is detached from the barriers of the first and the second regions in a cut'n'seal welding step generating the welding seam. This is sealing seam particularly important, as it constitutes a barrier between the joined first and second regions and the volume inside this insert, which stems from the third external environment. The integrity of the environmental status of the joined environment is therefore also maintained by the insert's side walls and their connecting welding seams. A volume of the external environment is therefore safely enclosed within the insert.

In the context of transferring sterilised or aseptic goods, objects or material in particular the first region may be a closed container. It may be a packaging bag. Preferable, this container or bag is made from material which is suitable for sterilisation of its contents. Possible sterilisation methods include autoclaving or radiation treatment. Other sterilisation methods, such as chemical sterilisation, are possible if suitable for the transferred objects, goods or (biological) material.

The receiving region, or second region, may be a room or a chamber of desired environmental conditions or contamination status. This region can be a closed region. This region may also be an open region. In case this second region is an open region, the third external region is be a contained region.

For example, the third region may be a contained contaminated or toxic environment and the first region may be a safety suit protecting a person from the hazardous environment of the third region. By joining the uncontaminated environment of the interior of the safety suit, i.e. the first region, with the uncontaminated environment of the open second region, the person can securely exit the safety suit without being exposed to contamination.

A repeated use of the joining mechanism is desirable for a number of applications, by way of example the repeated sterile transfer of objects into a sterile chamber. To this end, the system may provide for an endless liner with multiple serially arranged connection portions. The endless liner forms part of the at least partially flexible barrier of the second region. By separating the two areas after the transfer as suggested above, an unused connection portion may be used for a subsequent transfer.

Optionally, the endless liner may be integrated in an air lock structure. The endless liner can be progressively pulled from this air lock structure, without severing the liner from the air lock structure, in order to provide access to unused connection portions.

The aims of the invention are furthermore achieved by the provision of a device for transferring material or equipment avoiding contamination, characterized in that it comprises a connection portion having a first area at least partially made of thermo-resistant material, and the second area, wherein the second area is weldable to an area with equivalent physical properties, under predetermined welding conditions, whereas the first area (41) is not weldable to said second area under the predetermined welding conditions.

By maintaining intact barriers throughout the joining process, the method and device are therefore well suited for sterile applications, such as sterile or aseptic transfer of material, goods, organs, biological matter, lifeforms, equipment or objects.

In a medical context the system can be used for the transfer of medical equipment, including syringes, containers, catheters, surgical implants or instruments, and other consumables or tools. The transfer can take place, by way of example, between a packaging bag and a clean room or chamber. The transfer can also take place between two clean rooms or chambers.

However, the use of the system described herein is not limited to these applications.

Further application examples include exiting from a safety suit into an uncontaminated region, while the suit is still located in a contaminated environment requires a hermetically sealed connection between the suit and the uncontaminated region through which the person wearing the suit can exit into the uncontaminated area. Since the suit is preferably initially not connected to the uncontaminated region, in order to allow for free movement through the contaminated environment, a save opening has to be generated to join the inside volume of the suit with the uncontaminated region.

The system is furthermore suited for applications for which regions of specific atmospheric conditions, such as anaerobic conditions, need to be joined without risking exposure or influx of the surrounding air.

The invention disclosed herein is furthermore useful for joining a contaminated first region with a second region without risking contamination of the surrounding environment or an uncontaminated third region.

### Short description of the drawings

Exemplar embodiments of the invention are disclosed in the description and illustrated by the drawings in which:
**Figure 1** are cross sectional views of the barriers enclosing the first and the second regions, with
   **Figure 1A** schematically representing a bag enclosing the first region with an object for transfer, and
   **Figure 1B** schematically representing an endless-liner barrier of the second region integrated in an airlock system.
**Figure 2** schematically shows the connection portions of the barriers, with
   **Figure 2A** showing a top view of a second zone 42 of the connection portion 40 with the virtual welding band zone 44, and
   **Figure 2B** showing a cross sectional side view of the aligned connection portions 402, 403 for welding
**Figure 3** demonstrates the procedural steps of the separation welding procedure joining two areas with cross sectional views, wherein
   **Figure 3A** illustrates the alignment of the connection portions of a bag confining the first region and a containment barrier of the second region,
   **Figure 3B** illustrates the first welding band zones in which the aligned connection portions will be welded as part of the separation welding procedure,
   **Figure 3C** illustrates the welded and cut first welding band zones and the detachment of the insert,
   **Figure 3D** illustrates the subsequent optional step of disconnecting the two joined regions using separation welding.
**Figure 4** is a schematic top view of
   **Figure 4A** a sealed bag with a connection portion and
   **Figure 4B** an endless liner with serially arranged connection portions;
**Figure 5** is a perspective view of the welding device;
**Figure 6** is a perspective view of the welding device suitably positioned next to an air lock system of the second region in preparation of the procedure

### Examples of embodiments of the present invention

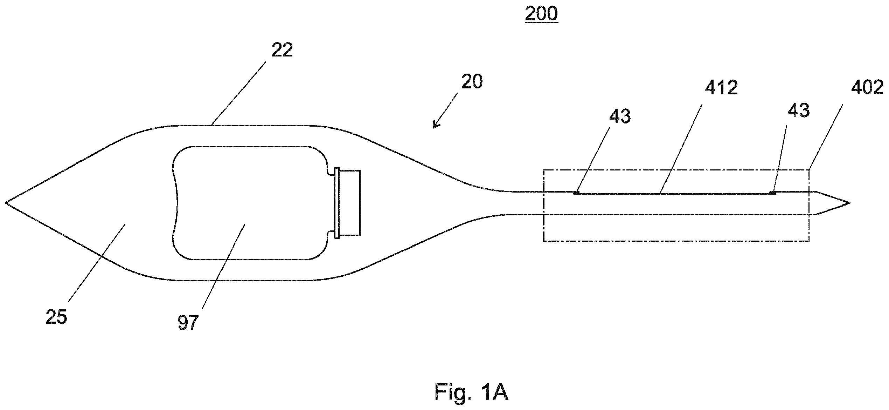

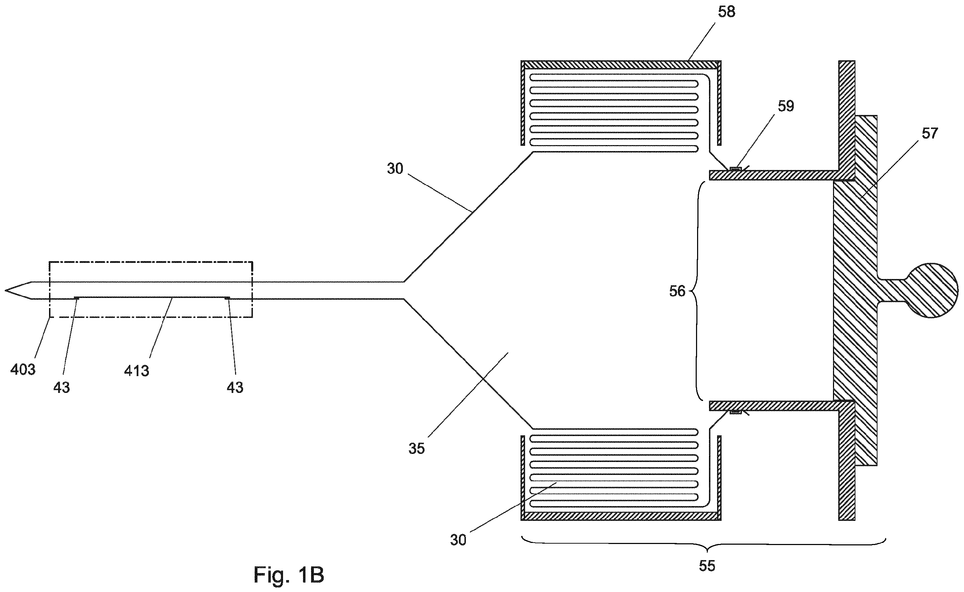

With reference to figure 1, a schematic cross section of a preferred embodiment of the at least partially flexible barriers 22, 32 confining two separate regions 25, 35 to be joined is shown. Figure 1A exemplifies a first enclosed region 25 with a content 97, in this case a flask, for transfer. The first region 25 is confined by a sealed bag 20, which comprises a connection portion 40. The sealed bag separates the first region 25 from the external environment 200.

Figure 1B shows a schematic cross section of a preferred embodiment of the at least partially flexible barrier 32 confining the second region 35. In this example, the barrier is at partially formed by an endless liner 30, which is connected to an air-lock structure 55 comprising an air lock door 57 and an air lock opening 56. The endless liner 30 is connected to the opening along a liner attachment zone 59. This attachment zone 59 constitutes a hermetic connection between liner 30 and air lock structure 55. This attachment zone 59 forms part of the environmental barrier between the second region 35 and the external environment 200. To this end the attachment zone 59 follows uninterruptedly a closed band or line along the confining wall of the air lock opening 56. The attachment zone 59 may be positioned along the inner surface of said wall. It may also be positioned along the outer surface of said wall. Alternatively, the endless liner 30 may be hermetically connected to a different suitable part of the air lock structure 55.

An additional containment element 58 suited to contain the assembled endless liner 30 is preferably connected to the air-lock structure 55. The liner 30 may be folded, rolled, compressed inside this containment element 58. Other assembly arrangements suited to decrease the volume of the endless liner 30 are possible.

The invention is not limited to the above described embodiments. The bag may be replaced by another confining at least partially flexible barrier 22 for a first region 25, such as a container, a chamber, a room or a protective suit. Other examples are conceivable.

The second region may be limited by an at least partially flexible barrier 32 enclosing a container, a chamber, a room or an open region. If the second region is an open region, it is separated from the external environment by a separation barrier, which may be a wall. If the second region is an open region, the external environment is an enclosed region confined by barriers.

The barrier of the first region 22 and the barrier of the second region 32 each comprise connection portions 40. In Figure 1A and 1B the connection portion 402 of the bag 20 and the connection portion 403 of the endless liner 30 are shown.

Each connection portion 402, 403 includes a at least partially thermo-resistant first area 412, 413 which is at least partially made from material which is not weldable under predetermined welding conditions, at which the second area 422, 423 comprised by the connection portion is weldable. By way of example, predetermined welding conditions may be welding temperatures between 250 °C and 120°C, or between 200 °C and 100 °C. In this case, the material must be able to withstand the heat above 200°C, or above 250 °C. In particular, the material must not lose its physical integrity at the predetermined welding conditions. In the exemplified case, the material must furthermore be suited to transfer sufficient heat from the welding stamp 605 of the welding device 600 to the first welding band zones 44 of the connection portions 402, 403 to enable separation welding of the first welding band zones 44. Such material may be a thermo-resistant plastic material, preferably a polyethylene terephthalate (PET) material.

In a preferred embodiment the at least partially thermo-resistant first area 41 is a two layer film comprising a thermo-resistant PET layer at the inner surface, i.e. the second area 42 facing surface, of the connection portion 40, and a weldable layer, for example a polyethylene (PE) layer at the outer surface, i.e. the external environment 200 facing surface, of the connection portion 40. This arrangement permits welding of an insertable first area 41 to the surrounding material of the at least partially flexible barrier, as mentioned below.

Alternatively, a thermo-resistant layer, for example a PET layer, can be affixed to the inner surface of the first area 41, i.e. the surface facing the second area 42, for example by means of a bonding agent.

The first at least partially thermo-resistant area 41 may be an area, which is inserted into the at least partially flexible barrier. An area of the at least partially flexible barrier may be removed and replaced by the inserted at least partially thermo-resistant area 41. The inserted first area 41 is attached to the barrier along an attachment zone 43 which follows the perimeter of the at least partially thermo-resistant area 41. The connection between the barrier and the first area 41 is a hermetic connection. Said hermetic connection may be a welded or a glued connection. Other forms of hermetic connections are conceivable.

Each portion 402, 403 furthermore includes a second area 422, 423, which is located in an area of the respective barrier, which is opposite the first area 412, 413. The second areas 422, 423 are facing the first areas 413, 412.

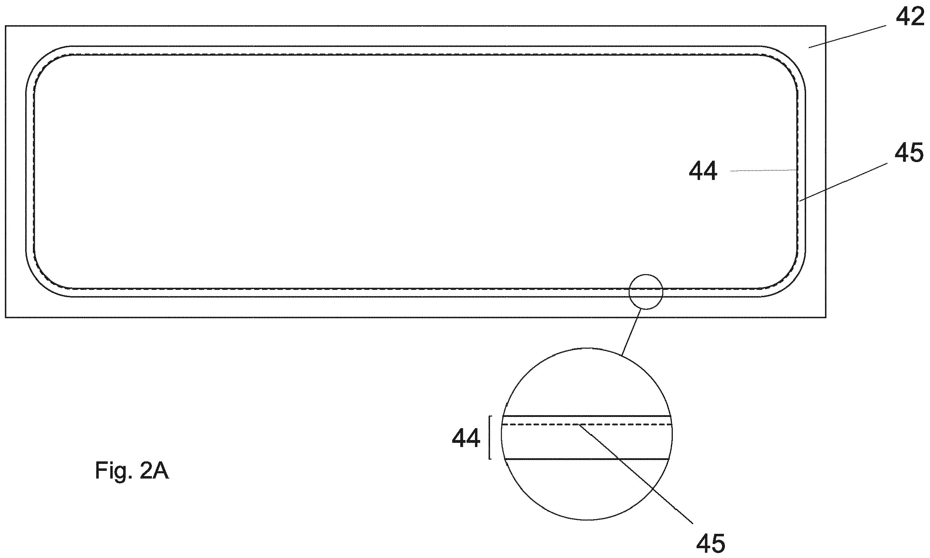

A schematic top view of a second area is shown in Figure 2A. The second area comprises a virtual first welding band zone 44, which includes a virtual separation line 45. The first welding band zone 44 is of a closed geometrical form. The shape of the first welding band zone 44 is defined by the shape of the first welding stamp 605. The outline of the separation line 45 is defined by the outline of the first separation wire 606. The separation line 45 is located inside and along the entire length of the first welding band zone 44. The first welding band zone 44 of the second area is made from material which is weldable to material of the same or similar physical properties at predetermined welding conditions, for example at temperatures between 250 °C and 120 °C, preferably between 200 °C and 150 °C. Welding band zones 442, 443 can be welded to each other at temperatures between 250 °C and 120°C, preferably between 200 °C and 150 °C. Suitable material for first welding band zones 44 are, by way of example, PE plastics.

Preferably the first welding band zone 44 and the second area are made of the same material. Preferably the second area 42 is made of the same material as the surrounding area of the barrier 22, 32.

Welding band zones 442, 443 are welded employing a separation welding method. During the cut'n'seal welding step the welded areas are cut along the separation line 45. Preferably, said separation welding method ensures that the cut edges of the welded zones are sealed off with a welded seam 47.

Preferably the welding method is impulse welding. Welding temperatures range from 250 °C to 120 °C, or from 200 °C to 100 °C.

In an alternative embodiment the welding method is ultrasonic welding.

The shape and size of the connecting opening 80, which is generated as part of the separation welding step, is defined by the size and shape of the welding zone band 44. As a consequence, is a wider opening is desired for a particular application, the size of the welding zone band 44 needs to be adjusted accordingly.

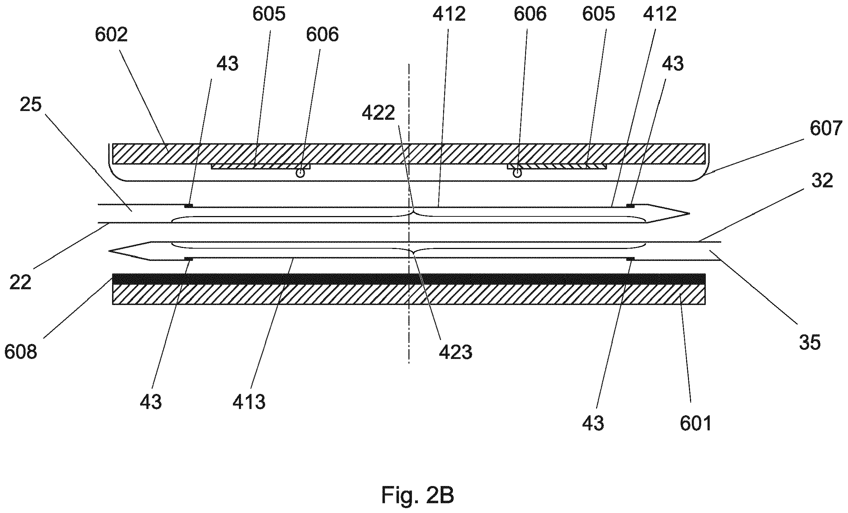

In Figure 2B the sandwich arrangement 100 of the connection portions 402, 403 of the second and first barriers is shown in a schematic cross section. The working surface 601 and the counter surface 602 of the welding device 600 are also shown. The counter surface comprises a welding stamp 605 with a separation wire 606, wherein the size and shape of the welding stamp corresponds to the size and shape of the first welding band zone 44. The counter-surface may be covered by non-stick layer 607, for example Teflon.The work surface is ideally covered by a soft, thermo-resistant 608, for example a silicon layer.

Positioning the two connection portions 402, 403 of the respective barriers in the demonstrated sandwich position in the welding device, is a first step in the separation welding process. Importantly, the first areas 412, 413 and the second areas 422, 423 must be super-positioned, wherein the second areas 422, 423 form the inner layers of the sandwich arrangement and the first areas 412, 413 form the outer layers of the sandwich arrangement 100. At a minimum the first areas 412, 413 cover the entire area of the first welding band zones 442, 443.

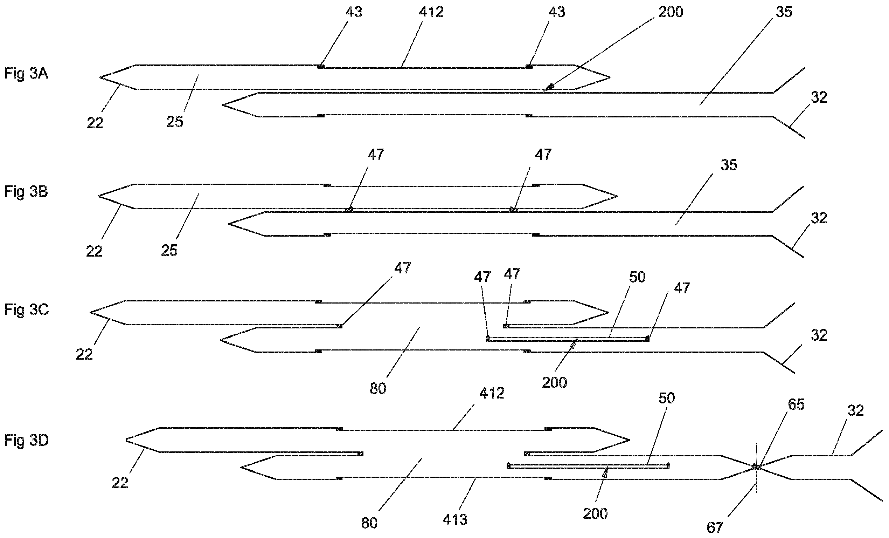

The individual steps of the cut'n'seal welding process are exemplified in Figure 3. Figure 3A shows the super-positioned connection portions 402, 403 of the barriers of a first region 20 and a second region 30, which are to be joined. Once arranged in this way, the separation welding step, for example impulse welding, can be conducted.

As a result of this step a welding seam 47 a separating cut along the separation line are generated. A cross sectional view of the closed welding seam 47 is shown in Figure 3B. The position of the separation line 45 is indicated by arrows.

An insert 50 is detached from the joined barriers. As a result of the location of the cut inside the welding seam 47, both, the entire perimeter of the insert 50, as well as the entire perimeter of the opening 80 are sealed by portions of the generated welding seam. The barriers of the first and the second regions 22, 32 are fused together by the welding seam 47. The welding seam 47 at the joined barriers 22, 23 describes an opening 80 which between the first 20 and the second 30 region.

The edges of the two walls of the insert 50 are fused together by the welding seam 47. The inside of the insert contains a part of the external environment 200. Once removed from the opening 80, the insert 50 is situated within the joined first and second regions 20, 30. In order to avoid exposure to the external environment, it is therefore essential, that the welding seam 47 seals the part of the external environment securely within the volume contained inside the insert 50.

No additional step is required to detach the cut insert 50 from the joined barriers 22, 23. However, pulling apart of the outer surfaces of the sandwich arrangement may help to remove the cut insert 50 from the opening 80.

As an optional subsequent step shown in Figure 3D, the two regions can be separated again by an additional separation welding step along a second welding band zone 65, which comprises a separation line and is positioned in such a way that is can cut the barrier to separate two regions. Preferably, the edges of each region along the cut line 67 are sealed by a welding seam 47. The separation welding is performed in such a way that the second region 35 is securely sealed from the external environment 200.

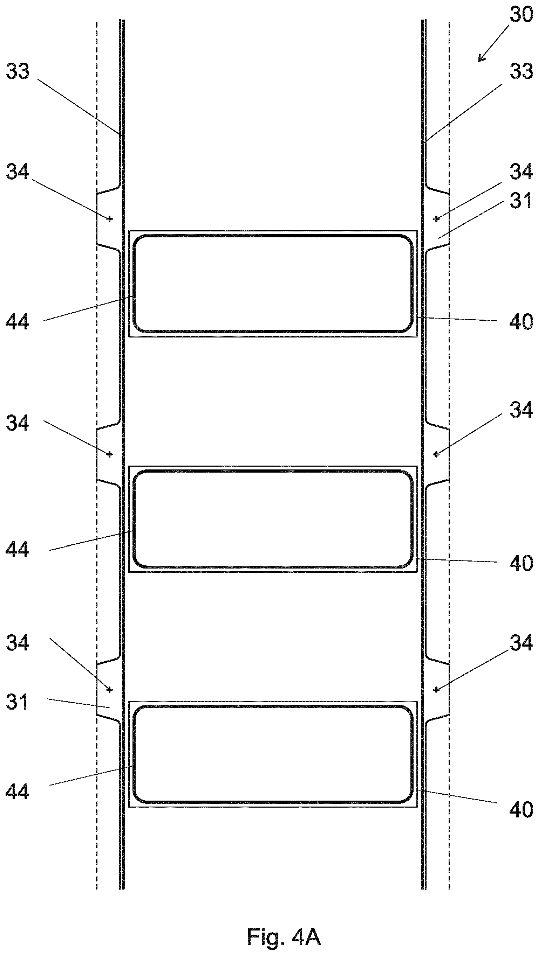

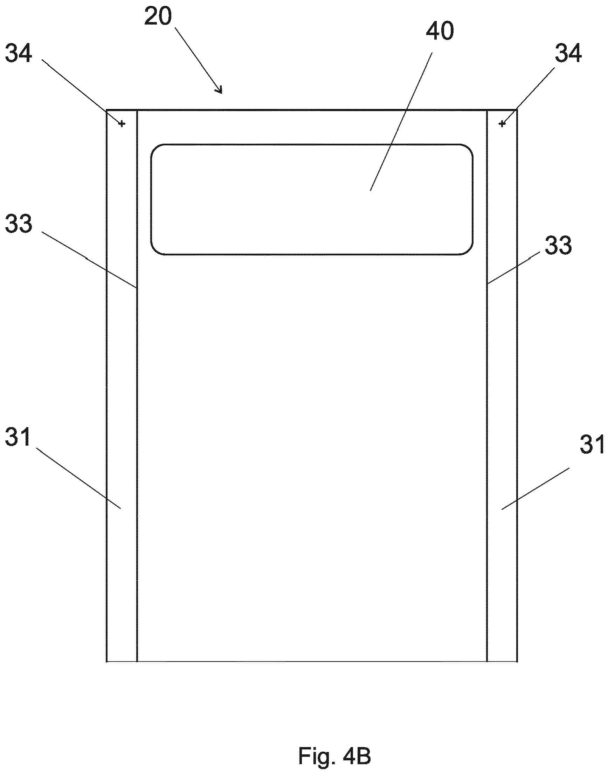

Referred devices for the procedure described above are shown in Figure 4. Figure 4A is a schematic top level view of a section of a flattened endless liner 30. Preferably the endless liner has an essentially tubular shape. The endless liner is of flexible material, for example PE plastic,and can be flattened into a flattened position which is shown in Figure 4A. The endless liner comprises multiple connection portions 40, which are arranged serially, preferably at intervals, along the length of the endless liner 30. In its flattened position, the first are 41 and second area 42 of each connection portions 40 or super-positioned. The endless liner may have two connection seams 33, for example as a result of gluing or welding, along each of the longitudinal sides of the flattened liner. These connection seams 33 are a barrier between the portion of the liner, which comprises the connection portions 40 and which acts as a barrier for the second region 35, and external portions 31. The external positions 31 may comprise positioning points 34, which serve assist the correct positioning of the connection portion 40 in the welding device 600 in preparation of the separation welding process.

Figure 4A shows the first area 412 and indicates the shape of the virtual first welding band zone 44 upon which the heat of the welding stamp 605 will be applied during the described procedure.

In a preferred embodiment the first region 25 is confined in a sealed bag 20, such as schematically illustrated in Figure 4B. This figure shows a flattened top level view of the empty bag with the connection portion 40, connection seams 33 along its sides and positioning points 34. The positioning points 34 are situated, that superposition of the positioning points 34 of the bag with the positioning points of the endless liner ensures proper alignment of the connection portions 40 for welding. To assist this alignment the welding device 600 may be equipped with positioning pins 609, suited to hold the positioning points 34 in place during the welding process.

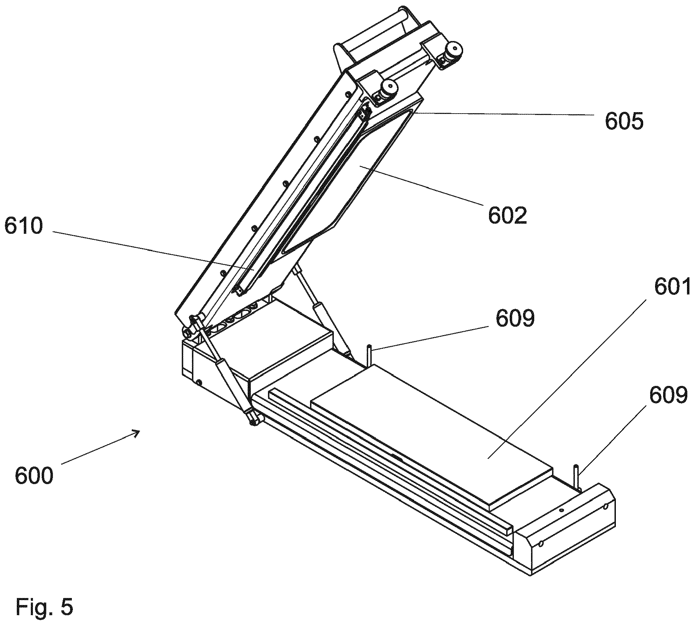

Figure 5 is a schematic presentation of a welding device 600. The device comprises A working surface 601 designed to support the joinable and separable barriers and a counter surface 602 for applying pressure to the connection portions 40, an electrical device for temperature-controlled heating of a first welding stamps 605 of closed geometrical shape suited to connect the first welding band zones and located on the working surface 601 and the countersurface 60. The welding device furthermore comprises a first separation wire 606 suited to cut the welded barriers along their separation lines 45. The separation wire 606 is positioned inside and along the entire length of the closed welding stamp 605. The welding device also includes positioning pins 609 for arranging the connection sections 40 of the barriers in suitable sandwich formation and it optionally includes a second linear welding stamp 610, suited for sealing and cutting to separate the flexible barriers. The second linear welding stamp (610) comprises a separation wire and is positioned outside the closed shape of the first welding stamp 605.

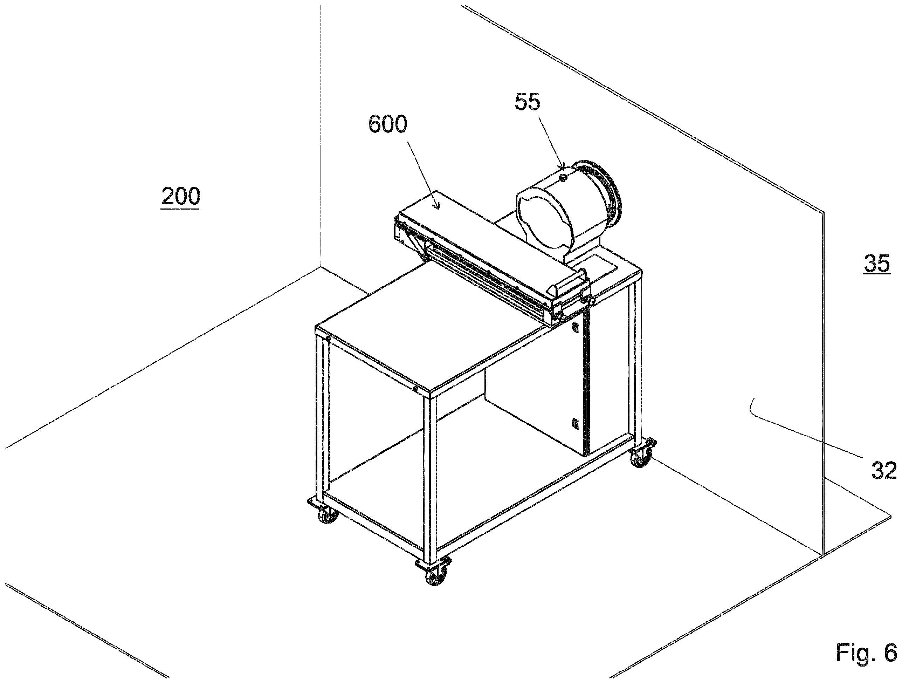

The position of the welding device 600 in relation to an air lock system 55 of a second region 35 without the endless liner or the first barrier is shown in Figure 6. In this embodiment, the second region 35 is partially confined by a wall, which forms part of the barrier of the second region 32. The second region in this embodiment may be a room or a chamber.

### Reference numbers used in the figure

- 20: sealed bag
- 22: barrier of first region
- 25: first region
- 30: endless liner
- 31: external portion
- 32: barrier of second region
- 33: connection seam
- 34: positioning points

- 35: second region

- 40: connection portion
- 402: connection portion of barrier enclosing first region
- 403: connection portion of barrier enclosing second region

- 41: first area
- 412: first area of first connection portion
- 413: first area of second connection portion

- 42: second area
- 422: second area of first connection portion
- 423: second area of second connection portion

- 43: attachment zone of first area

- 44: first welding band zones
- 442: first welding band zone of first connection portion
- 443: first welding band zone of second connection portion

- 45: separation line in first welding band zone
- 47: welding seam

- 50: insert

- 55: air lock structure
- 56: air lock opening
- 57: air lock door
- 58: containment element
- 59: attachment zone

- 65: second welding band zone
- 67: cut line
- 69: positioning point

- 70: longitudinal seals

- 80: connecting opening

- 97: flask

- 100: sandwich arrangement

- 200: external environment

- 600: welding device
- 601: working surface
- 602: counter surface
- 605: first closed welding stamp
- 606: separation wire
- 607: non-stick layer
- 608: silicon layer
- 609: positioning pins
- 610: linear welding stamp

## Claims

1. Method of creating an environmentally sealed connection for transfer between a first region (25) and a second region (35), the first region (25) and the second region (35) having each an at least partially flexible barrier separating the first region (25), respectively the second region (35) from a third external region (200), the at least partially flexible barriers (22, 32) having each a connection portion (40) comprising a first area (41) at least partially made of thermo-resistant material and a second area (42) comprising a first welding band zone (44) of a closed geometrical shape, the method comprising the following steps:
- superposition of said connection portions (40) of the barriers (22, 32) in a sandwich arrangement (100), , said first area (41) and second area (42) of each barrier (22, 32) being arranged to face one another, with the first areas (412, 413) at least partially made of thermo-resistant material of the two barriers forming the outside layers of the sandwich arrangement (100), and the second areas (422, 423) of the two barriers forming the inside layers of the sandwich arrangement, wherein the first areas (412, 413) are positioned to cover the first welding band zones (442, 443) of the second zones,
- joining the second areas (422, 423) by welding of the first closed welding band zones (442, 443), whereby a first separation line (45), comprised inside and along the length of the first welding band zone (44), is cut as a result of the welding and whereby the barrier areas enclosed by the separation line (45) are welded along their edges to form an insert (50), which becomes detached from the at least partially flexible barriers (22, 32),
- distancing the first areas (412, 413) of the super-positioned connection portions (401, 4012) from each other, thereby revealing an opening (80) confined by the welded seam (47) connecting the second areas (422, 423) of the at least partially flexible barriers and joining the first region (25) with the second region (35).

2. The method of the preceding claim comprising transfer of objects, such as equipment, goods or material, as well as organisms, chemical or biological matter from the first region (25) to the second region (35) through the opening (80).

3. Method according to claim 1 or 2, wherein, subsequent to the transfer, the at least partially flexible barriers (22, 32) of the first region (25) and the second region (35) are separated by welding along a second welding band zone(65) and cutting along a second separation line (67), whereby the second separation line is positioned inside the second welding band zone (65), preferably approximately centrally.

4. Method according to the preceding claims, wherein the first region (25) is a closed container, preferably a bag.

5. Method according to any of the preceding claims, wherein the second region (35) is a room or a chamber of a defined environmental setting, which can be open or closed.

6. Method according any of the preceding claims, wherein the at least partially flexible barrier (32) of the second region (35) is an endless tubular liner (30) comprising a plurality of connection portions (40) serially arranged throughout its length.

7. Method according to claim 6, said tubular liner (30) being positioned around an air lock structure (55) of the second region (35), through which the material or equipment can be transferred, wherein the endless tubular liner (30) is progressively pulled to permit successive use of the serially arranged connection portions for transfer.

8. Method according to any of the preceding claims, wherein the barriers (22, 32) are separating a contaminated third external region (200) from the uncontaminated or sterile, first region (25) and second region (35).

9. A device for transferring material or equipment avoiding contamination, **characterized in that** it comprises a connection portion (40) having a first area (41) at least partially made of thermo-resistant material, and a second area (42), wherein the second area is weldable to an area with equivalent physical properties, under predetermined welding conditions, whereas the first area (41) is not weldable to said second area under the predetermined welding conditions.

10. A device according to claim 9, whereby the first welding band zone (44) can be welded using an impulse welding procedure at temperatures ranging between 250 °C and 120 °C, or between 200 °C and 100 °C.

11. A device according to claim 9 to 10, wherein the device is made from weldable plastic material, such as polyethylene (PE), and the first area (41) is made of polyethylene terephthalate (PET) or has a PET layer.

12. A device according to claim 9 to 11, wherein the device is a bag, or an endless liner, or an endless liner comprising a plurality of connection portions (40) serially arranged throughout its length.

13. Use of method or device claimed in any of the preceding claims for the sterile transfer of medical equipment, such as syringes, catheters, surgical implants or instruments, and other consumables or tools, from a sterile packaging bag to a clean room area or chamber.

14. Use of method or device claimed in any of the preceding claims to transfer lifeforms, including humans, animals, plants and microbes, as well as biological material, samples and organs, between a first region (25) and a second region (35) of defined environmental conditions, whereby said regions are separated from the environmental conditions of a third external region (100) by means of their barriers (22, 32).

15. A welding device capable welding the first welding band zones (442, 443) of the at least partially flexible barriers (22, 32), which confine the first region and second region, by carrying out a method according to one of claims 1 to 10, **characterized in that** it comprises:
- A working surface (601) designed to support the joinable and separable barriers and a countersurface (602) for applying pressure to the connection portions (40),
- an electrical device for temperature-controlled heating of
- a first welding stamp (605) of closed geometrical shape suited to connect the first welding band zones and located on the working surface (601) and the counter surface (602) and
- first separation wire (606) suited to cut the welded barriers along the first separation line (45) and situated inside and along the entire length of the first closed welding stamp (605),
- positioning pins (609) for arranging the connection sections (402, 403) of the barriers in suitable sandwich formation (100) and,
- optionally, a second of linear welding stamp (610) with a second separation wire, wherein the welding stamp (610) and separation wire are positioned outside the closed shape of the first welding stamps (605) and are suited for sealing and cutting to separate the at least partially flexible barriers (22, 32).
